# EUROPEAN PATENT APPLICATION

(11) **EP 3 650 710 A1**
(43) Date of publication of application: **13.05.2020**
(21) Application number: 19201605.3
(22) Date of filing: 07.10.2019
(51) Int. Cl.: F15B 15/12, F01D 17/26, F04D 27/02, F04D 29/56

(54) **ACTUATOR**

(30) Priority: 06.11.2018 GB 201818074
(71) Applicant: Rolls-Royce plc, London N1 9FX (GB)
(72) Inventor: Tramontin, Timothy, Derby, Derbyshire DE24 8BJ (GB); Hussain, Zahid, Derby, Derbyshire DE24 8BJ (GB)
(74) Representative: Rolls-Royce plc

(57) **Abstract**

A modular fluid-drive rotary actuator 100 comprising a housing defining a chamber, a rotary driver disposed within the chamber. The rotary driver may comprise a modular driver assembly of at least two drive wheels 106, 206, and/or the housing may comprise at least a first end part 102, a second end part 104 and an interchangeable intermediate part 202 disposed between them. There is also disclosed a method of reconfiguring a fluid-driven rotary actuator 100 by replacement, addition or removal of one or more drive wheels or housing parts.

## Description

### FIELD OF THE DISCLOSURE

The present disclosure relates to a modular actuator for a variable stator vane arrangement.

### BACKGROUND

Gas turbine engines comprise several stages of axial compression. In order to optimise performance of the engine and allow for acceptable engine operability throughout the flight envelope, stator vanes may be configured to pivot to vary their pitch or angle of incidence with respect to the annulus flow through the engine. One known arrangement for actuating such stator vanes is to provide a unison ring coupled to each of the stator vanes and rotatable about a central axis of the engine to cause the stator vanes to pivot. One or more actuators with control rods acting on the unison ring may be disposed around the unison ring to drive rotation.

### SUMMARY

The present disclosure provides a modular fluid-driven rotary actuator, a gas turbine engine, and a method of reconfiguring a modular fluid-driven rotary actuator, as set out in the appended claims.

According to a first aspect there is provided a modular fluid-driven rotary actuator comprising:
a housing comprising a first end part and a second end part defining respective ends of a chamber within the housing;
a rotary driver disposed within the chamber and coupled to a shaft extending through the housing along a rotary axis, wherein the rotary driver comprises a modular driver assembly of at least two drive wheels coaxially assembled in side-by-side relationship and configured to rotate together to drive the shaft;
a fluid inlet extending through the housing to the chamber to provide a drive fluid to the rotary driver; and
a fluid outlet extending through the housing from the chamber to discharge a drive fluid from the rotary driver.

The drive wheels may be configured to rotate together by way of being individually rotationally fixed with respect to shaft. The shaft may be keyed to engage corresponding holes in each of the drive wheels.

The housing may comprise a modular housing assembly of at least three parts including: the first part which defines at least a first axial end of the chamber; the second part which defines at least a second axial end of the chamber; an interchangeable intermediate part disposed between the first part and the second part. The modular housing assembly may be configured for removal of the intermediate part, or replacement of the intermediate part with one or more intermediate parts to accommodate an alternative configuration of a rotary driver. The axial extent of the intermediate part may correspond to the axial extent of one of the drive wheels.

According to a second aspect there is provided a modular fluid-driven rotary actuator comprising:
a housing comprising a first end part and a second end part defining respective ends of a chamber within the housing;
a rotary driver disposed within the chamber and coupled to a shaft extending through the housing, wherein the rotary driver comprises at least one drive wheel configured to rotate to drive the shaft;
a fluid inlet extending through the housing to the chamber to provide a drive fluid to the rotary driver; and
a fluid outlet extending through the housing from the chamber to discharge a drive fluid from the rotary driver;
wherein the housing comprises a modular housing assembly of at least three parts including:
   a first part defining at least a first axial end of the chamber;
   a second part defining at least a second axial end of the chamber; and
   an interchangeable intermediate part disposed between the first part and the second part;
wherein the modular housing assembly is configured for removal of the intermediate part, or replacement of the intermediate part with one or more intermediate parts to accommodate an alternative configuration of a rotary driver.

The rotary driver may comprise a modular driver assembly of at least two drive wheels coaxially assembled in side-by-side relationship and configured to rotate together to drive the shaft.

The two drive wheels may be of the same type of drive formation (e.g. both of a spur tooth type or both of a helical tooth type), or may be of different drive formations. The two drive wheels may have the same tooth profile or different tooth profiles. When the tooth profiles are different, they may differ by one or more parameters selected from the group consisting of: a tooth depth, a tooth pitch, a total number of teeth around the drive wheel and a tooth geometry.

The rotary driver may be configured to fit within and cooperate with the housing to form a rotational seal between an axial end of the rotary driver and an opposing surface of the housing, the seal inhibiting leakage of a drive fluid therebetween.

The seal may be a metal-to-metal seal between a metallic surface of the rotary driver at the respective axial end, and the opposing metallic surface of the housing.

Such rotational seals may be formed at both axial ends of the rotary driver. The surface of the rotary driver at the axial end of the rotary driver may be planar, in particular radial.

The rotary driver may be configured to fit within and cooperate with the housing to form the metal-to-metal seal to prevent leakage of a drive fluid at a pressure in the range 100 to 1000 psi. Suitable drive fluids may be Jet A-1 fuel or Aerospace grade Gas Turbine lubrication oil.

According to a third aspect there is provided a gas turbine engine comprising a modular fluid-driven rotary actuator in accordance with the first or second aspect. The gas turbine engine may comprise a variable stator vane arrangement. The modular fluid-driven rotary actuator may be configured to actuate the variable stator vane arrangement.

According to a fourth aspect there is provided a method of reconfiguring a modular fluid-driven rotary actuator, the modular fluid-driven rotary actuator comprising:
a housing comprising a first end part and a second end part defining respective ends of a chamber within the housing;
a rotary driver disposed within the chamber and coupled to a shaft extending through the housing along a rotary axis;
a fluid inlet extending through the housing to the chamber to provide a drive fluid to the rotary driver; and
a fluid outlet extending through the housing from the chamber to discharge a drive fluid from the rotary driver;
the method comprising:
reconfiguring the rotary driver to vary a mechanical advantage of the actuator corresponding to a rotary force output of the shaft for given fluid inlet conditions.

The method may comprise reconfiguring the rotary driver to vary its axial extent, including:
replacing an installed drive wheel of the rotary driver with a replacement drive wheel having a different axial extent, and/or
adding a drive wheel to provide a modular driver assembly comprising at least two drive wheels coaxially assembled in side-by-side relationship and configured to rotate together with the shaft, or removing an installed drive wheel from such a modular driver assembly; and
reconfiguring the housing to accommodate the variation in the axial extent of the rotary driver in the chamber, including:
adding an intermediate housing part between the first end part and the second end part to provide a modular housing assembly, or removing an installed intermediate housing part from such a modular housing assembly; and/or
replacing one of the first end part and the second end part with a replacement end part so as to vary the axial extent of the chamber.

Reconfiguring the rotary driver may comprise replacing, adding or removing a drive wheel from the shaft. The shaft may be keyed to engage a corresponding hole in the respective drive wheel such that the drive wheel rotates together with the shaft.

A drive wheel having a first axial extent may be added to or removed from the rotary driver. An intermediate housing part having the same first axial extent may be correspondingly added to or removed from the rotary driver; or one of the first end part and the second end part may be replaced with a replacement end part so as to vary the axial extent of the chamber by the first axial extent.

The housing may be reconfigured to accommodate the variation in the axial extent of the rotary driver in the chamber such that a rotational seal is formed between an axial end of the rotary driver and an opposing surface of the housing, the seal inhibiting leakage of a drive fluid therebetween the respective surfaces.

The seal may be a metal-to-metal seal between a metallic surface of the rotary driver at the respective axial end, and the opposing metallic surface of the housing.

Reconfiguring the rotary driver may comprise replacing an installed drive wheel of the rotary driver having a first type of drive formation with a replacement drive wheel having a different type of drive formation; and/or replacing an installed drive wheel of the rotary driver with a replacement drive wheel having a different tooth profile to that of the installed drive wheel.

For example, one of the replacement drive wheel and the installed drive wheel may by of a spur tooth type and the other may be of a helical tooth type. By varying the type of drive formation, a drive wheel may be selected having a suitable performance corresponding to the drive requirements of the actuator, for example a different rotational force output for the same axial extent of the drive wheel.

For example, the tooth profile may differ by one or more parameters selected from the group consisting of: a tooth depth, a tooth pitch, a total number of teeth around the drive wheel and a tooth geometry. Such variations may be made to provide a drive wheel having a suitable performance corresponding to the drive requirements of the actuator, for example a different rotational force output for the same axial extent of the drive wheel.

In some examples, the replacement drive wheel may have a different axial extent to the installed drive wheel, and the method may further comprise reconfiguring the housing to accommodate the variation in the axial extent of the rotary driver in the chamber, including: adding an intermediate housing part between the first end part and the second end part to provide a modular housing assembly, or removing an installed intermediate housing part from such a modular housing assembly; and/or replacing one of the first end part and the second end part with a replacement end part so as to vary the axial extent of the chamber.

The modular fluid-driven rotary actuator may be installed in a gas turbine engine. The gas turbine engine may comprise a variable stator vane arrangement. The modular fluid-driven rotary actuator may be configured to actuate the variable stator vane arrangement

According to a sixth aspect there is provided a kit for a modular fluid-driven rotary actuator of the first aspect, the kit comprising:
a plurality of housing parts configured to be selectively assembled to form a housing, the housing including:
a first end part and a second end part configured to define respective ends of a chamber within an assembled housing;
at least one further housing part selectively installable in an assembled housing including the first end part and the second end part to vary the axial extent of the chamber, the at least one further housing part including:
   a replacement end part configured to replace one of the first end part and the second end part in the assembled housing so as to vary the axial extent of a chamber defined in the housing; or
   an intermediate housing part configured to be installed between the first end part and the second end part;
a shaft; and
a plurality of drive wheels, each configured to be mounted to the shaft for rotation together with the shaft.

At least one of the drive wheels may have a first axial extent. The at least one further housing part may be selectively installable in an assembled housing including the first end part and the second end part to vary the axial extent of the chamber by the first axial extent.

As noted elsewhere herein, the present disclosure may relate to a gas turbine engine. Such a gas turbine engine may comprise an engine core comprising a turbine, a combustor, a compressor, and a core shaft connecting the turbine to the compressor.

Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** schematically shows a cutaway view of an intermediate pressure compressor section in a gas turbine engine;
**Figure 3** schematically shows an exploded view of an example fluid-drive modular rotary actuator;
**Figure 4** schematically shows a cross-sectional view of the actuator of Figure 3;
**Figure 5** schematically shows an exploded view of the example actuator of Figure 3 reconfigured to vary the axial extent of the rotary driver;
**Figure 6** schematically shows a cross-sectional view of the reconfigured actuator of Figure 5;
**Figure 7** is a flow diagram of a method of increasing the axial extent of a fluid-driven modular rotary actuator; and
**Figure 8** is a flow diagram of a method of decreasing the axial extent of a fluid-driven modular rotary actuator.

### DETAILED DESCRIPTION

Aspects and embodiments of the present disclosure will now be discussed with reference to the accompanying figures. Further aspects and embodiments will be apparent to those skilled in the art.

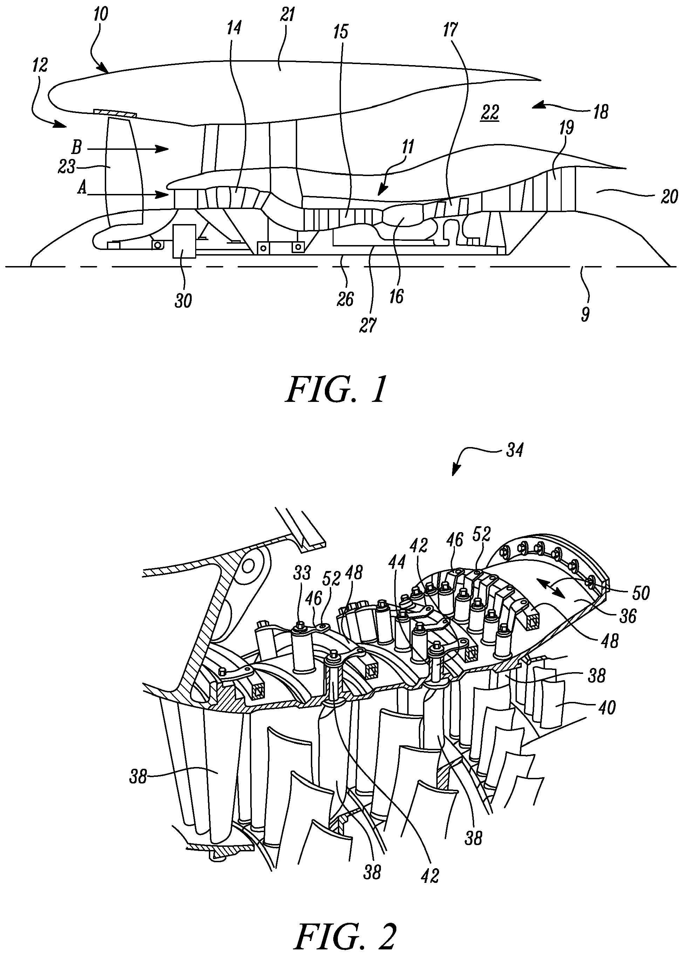

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

**Figure 2** shows a cutaway view of an example intermediate pressure compressor 34 of the gas turbine engine. In this example, the intermediate pressure compressor 34 has a casing 36 and four successive compression stages, each of which comprises a set of stator vanes 38 and a set of rotor vanes 40 downstream of the set of stator vanes 38.

Each set of stator vanes 38 comprises a plurality of stator vanes 38 which are pivotably mounted to the casing 36 around its circumference and extend radially inwardly from the casing 36. Each set of rotor vanes 40 comprises a plurality of rotor vanes 40 which are mounted to a rotatable support on a shaft (not shown) towards a radial centre of the casing 36, and are rotatable within the casing 36 around the rotational axis 9 of the engine 10.

The stator vanes 38 are variable stator vanes such that the pitch (or incidence, angle of attack) of the stator vanes 38 can be varied during use to optimise performance and manage operability of the engine 10. In this example, the stator vanes 38 each comprise a vane stem 42 extending from a radially outer end of the stator vane 38 and through a bush bearing 44 in the casing 36. The vane stems 42 are each coupled to a respective lever 46 by means of a bolt 33 outside the casing 36, the lever 46 extending perpendicularly out from the vane stem 42.

A unison ring 48 extends circumferentially around the casing 36 and is rotatable around the casing 36 by a crankshaft or bellcrank in circumferential directions indicated by arrow 50. Each compression stage has a corresponding unison ring 48. The levers 46 fixed to the stator vanes 38 in a compression stage are each pivotably coupled to the corresponding unison ring 48 of the respective compression stage by a pin 52.

To change the pitch of the variable stator vanes 38, the unison ring 48 is rotated around the casing 36 in a circumferential direction (as indicated by the arrow 50), causing the levers 46 to pivot, and therefore the stator vanes 38 to pivot and change pitch.

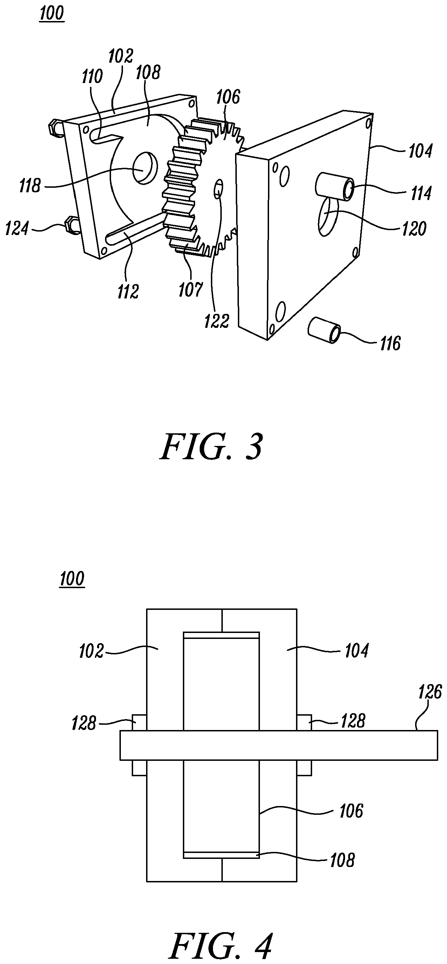

**Figure 3** shows a fluid-drive modular rotary actuator which is suitable for actuating a variable stator vane arrangement of a gas turbine engine and may be installed in the example variable stator vane arrangement of Figure 2, for installation in a gas turbine engine as described above with reference to Figure 1. For example, the rotary actuator may be coupled to a unison ring directly to transfer rotational motion to the ring or with another mechanical linkage for actuating rotation of one or more variable stator vanes. In some such arrangements the rotary output of the actuator may be converted to linear or other motion, for example using a cam.

Actuation of a variable stator vane arrangement represents one example use in a gas turbine engine. A rotary actuator as described herein may be used to actuate other mechanisms in a gas turbine engine or other machine.

As shown in Figure 3, the rotary actuator comprises a housing including a first end part 102 and a second end part 104 which define therebetween a chamber 108 that is configured to receive a rotary driver rotatable about a rotary axis. In this example, the rotary driver comprises a single drive wheel 106.

In this example, the chamber 108 is defined by recesses in each of the two end parts 102, 104, though in other examples one of the end parts may not include a recess, for example it have a flat surface defining a respective end of the chamber 108. In this particular example, the depth of each recess in the respective end part 102, 104 corresponds to half the depth of the drive wheel 106, though in other examples the depths may vary between the two end parts. The term "depth" is used herein to describe the axial extent of a part of feature, with respect to the rotary axis of the rotary driver.

As will become apparent from the foregoing description, in some examples, components of the modular rotary actuator may be configured to be interchangeable and/or removed or added to the actuator, so as to vary the axial extent of the rotary driver and the chamber in which it is housed. In some examples, the components may be provided to facilitate the varying the axial extent of the rotary driver by a unit depth, for example by increasing the axial extent of the rotary driver by integer multiples of the unit depth (including 1), or by reducing the axial extent of the rotary driver by integer multiples of the unit depth.

Accordingly, the drive wheel 106 of this example shall be described herein as having a unit depth, and the recesses in each of the end parts 102, 104 shall be described herein as having a half-unit depth (i.e. one half of the unit depth).

The drive wheel 106 is a generally circular toothed wheel comprising a plurality of radially extending teeth 107 around the perimeter of the drive wheel 106. The chamber 108 comprises a corresponding cylindrical wall defined between the recesses in the two end parts 102, 104 and configured so that the toothed wheel fits closely within the chamber 108.

As shown in Figure 3, the chamber 108 comprises a main cylindrical portion for receiving the drive wheel 106, an inlet channel 110 extending along a first direction from an inlet port 114 in one of the end parts (the second end part 104, in this example) to the periphery of the main cylindrical portion for providing drive fluid to the drive wheel 106 within main cylindrical portion, and an outlet channel 112 extending along an opposing second direction from the periphery of the main cylindrical portion for discharging drive fluid from the drive wheel 106 towards an outlet port 116 in one of the end parts (the second end part 104, in this example). As shown in Figure 3, the respective channels 110, 112 join the periphery of the main cylindrical portion at angular spaced portions so that in use a driven fluid provided to the drive wheel 106 from the inlet channel 110 acts on the teeth 107 of the drive wheel 106 to cause rotary motion of the drive wheel 106, before being discharged through the outlet channel 112. In this particular example, the channels 110, 112 intersect the periphery of the main cylindrical region at substantially diametrically opposed locations.

In this example, the inlet port 114 and the outlet port 116 are formed by threaded bores in the second end part 104, which are configured to receive fluid line connectors for the supply and discharge of the drive fluid. For example, the fluid line connectors may provide a working fluid of a gas turbine engine or other machine, which may be a liquid or gas. The working fluid may be a fuel.

As shown in Figure 3, each of the housing parts 102, 104 and the drive wheel 106 comprises a centrally-arranged through-hole 118, 120, 122 to receive a shaft (not shown). The housing parts 102, 104 comprise plain through-holes to permit rotation of a keyed shaft, whereas the hole 122 at the centre of the drive wheel is complementarily profiled to engage a keyed shaft, such that once the shaft is inserted through the hole 122 of the drive wheel 106, they are rotationally fixed with respect to each other. The hole 122 at the centre of the drive wheel 106 defines the rotational axis of the drive wheel, and thereby of the rotary drive over this example.

Fixing holes are provided around the housing end parts to connect the end parts together around the drive wheel using fasteners, such as bolts 124 as shown in the example of Figure 3.

**Figure 4** shows the rotary actuator 100 as assembled in cross-section. As shown in Figure 4, the end parts 102, 104 of the housing are assembled around the drive wheel 106 to define a chamber 108, and a shaft 126 is inserted through the holes in the housing end parts 102, 104 and the drive wheel. Bearing arrangements 128 are provided on each side of the housing to support the shaft.

The housing end parts 102, 104 and the rotary driver formed by the drive wheel are configured so that the depth (i.e. the axial extent) of the rotary driver corresponds to the depth of the chamber 108. In this example, the rotary driver is configured to fit within and cooperate with the housing to form for a rotational seal between each axial end of the rotary driver and a respective opposing surface of the housing which defines the chamber. The seal inhibits leakage of a drive fluid therebetween, for example by completely preventing leakage of drive fluid therebetween.

In this particular example, the rotary driver and the housing parts each comprise metal, and the rotational seal is a metal-to-metal seal formed by virtue of close tolerancing and planarity (flatness) of the respective surfaces.

Formation of the metal-to-metal seal may be formed in operation within a range of operating conditions. For example, such a seal may be formed when a drive fluid is provided to the rotary actuator in a pressure range of between 100-1000psi. Suitable drive fluids for the formation of such a seal may include fuels such as Jet A-1 and Gas turbine lubrication oils.

In other examples, a seal element may be provided between the housing parts and the rotary driver, such that non-metallic components may be used and a metal-to-metal surface is not formed. Examples of suitable seal elements include metal ring seals, metal energised seals and high temperature elastomeric seals.

In use, the rotary actuator 100 may be installed in a gas turbine engine or other machine. An example use will be described herein with respect to actuating a variable stator vane arrangement in a gas turbine engine.

In use, the rotary actuator 100 is assembled from a kit of parts including at least the two housing end parts 102, 104, the rotary driver including the drive wheel 106, the shaft 126. The rotary actuator 100 is installed to actuate the variable stator vane arrangement, for example by the shaft engaging a rotary rack for a unison ring, or by way of a cam which converts the rotational output of the shaft to substantially linear motion of a drive rod or pulley to move the unison ring. In other examples, the rotary actuator may not engage a unison ring, and may instead actuate one or a cluster of stator vanes around the annulus of the gas turbine engine.

For example, the rotary actuator 100 may be installed on the structural casing of the gas turbine engine (i.e. outside the working gas flow annulus of the engine, and within the outer nacelle (also referred to as core fairings) of the engine, for example in the region where the vane stems 42 of Figure 2 extend to engage the respective levers 46 or other mechanical linkage that may be used to actuate the variable stator vanes).

As is known in the art, space for actuators and other ancillary equipment within a gas turbine engine is limited, as is often the case with other machines. Accordingly, in the design of the gas turbine engine a space may be allocated for the rotary actuator. The space allocated for the rotary actuator may be configured to accommodate a deeper axial extent than the initial configuration of the rotary actuator as described above with respect to Figures 3 and 4, such that the axial extent of the rotary actuator may be varied, as will become apparent from the further description below.

Rotary actuation enables a lower overall height occupation than linear systems with crankshafts. In linear systems, a good mechanical advantage typically requires a large lever arm. This is especially valuable on gas turbine engines having core-mounted engine accessories which increase the number of pipes and cables needing routing on the core, for example gas turbine engines in which the fan is driven by a gearbox, which may necessitate a plurality of core-mounted engine accessories.

The rotary actuator 100 is coupled to a drive fluid system which may be a hydraulic or pneumatic supply of the gas turbine engine which is configured to provide a pressurised drive fluid to the rotary actuator. In this example, the drive fluid is fuel supplied under pressure from a fuel pump (known as a "fueldraulic" system). Supply of a pressurised drive fluid to rotary driver via the inlet port 114 and inlet channel 110 of the rotary actuator 100 causes the drive fluid to act on the teeth 107 of the or each drive wheel 106 so as to cause rotation of the rotary driver, thereby causing rotation of the shaft 126 for actuation of the variable stator vane arrangement. The drive fluid acts against the generally radially-extending surfaces of the teeth and flows circumferentially around the chamber 108 to be discharged at the outlet channel 112, flowing to the outlet port 116 and returned to the drive fluid system (i.e. the fueldraulic system, in this example).

As will be appreciated, the drive fluid may be provided at a variable or constant pressure, depending on the configuration of the drive fluid system. A controller may be provided to vary opening and closing of one or more control valves upstream or downstream of the rotary actuator to control the supply and/or discharge of the working fluid to the rotary actuator.

The force of the drive fluid on the drive wheel is proportional to the surface area of the teeth against which the drive fluid acts when it is provided into the chamber 108.

The inventors have devised a configuration of a rotary actuator which permits reconfiguration of the rotary actuator to vary a mechanical advantage of the actuator corresponding to a rotary force output of the shaft for given fluid inlet conditions. In particular, the axial extent of the rotary driver within the housing can be varied, thereby permitting variation of the surface area of the teeth and so the amount of force that is generated on the rotary driver with a given pressure of the drive fluid.

A housing part may be replaced, added or removed to vary the axial extent of the chamber 108 defined by the housing, and a drive wheel may be replaced with one of a different axial extent, or a drive wheel may be replaced, added to or removed from the shaft to vary the axial extent of the rotary driver.

Additionally or alternatively, an installed drive wheel of the rotary driver having a first type of drive formation (e.g. a spur tooth type) may be replaced with a replacement drive wheel having a different type of drive formation (e.g. a helical type); and/or an installed drive wheel of ay be replaced with a replacement drive wheel having a different tooth profile to that of the installed drive wheel.

By varying the type of drive formation, a drive wheel may be selected having a suitable performance corresponding to the drive requirements of the actuator, for example a different rotational force output for the same axial extent of the drive wheel. Accordingly, variation of the type of drive formation may be used to provide a different mechanical advantage for given inlet conditions.

Further, the tooth profile may differ by one or more of: a tooth depth, a tooth pitch, a total number of teeth around the drive wheel and a tooth geometry. Such variations may be made to provide a drive wheel having a suitable performance corresponding to the drive requirements of the actuator, for example a different rotational force output for the same axial extent of the drive wheel. Accordingly, variation of the tooth profile may be used to provide a different mechanical advantage for given inlet conditions.

In some examples, the replacement drive wheel may have a different axial extent to the installed drive wheel, and the method may further comprise reconfiguring the housing to accommodate the variation in the axial extent of the rotary driver in the chamber, including: adding an intermediate housing part between the first end part and the second end part to provide a modular housing assembly, or removing an installed intermediate housing part from such a modular housing assembly; and/or replacing one of the first end part and the second end part with a replacement end part so as to vary the axial extent of the chamber.

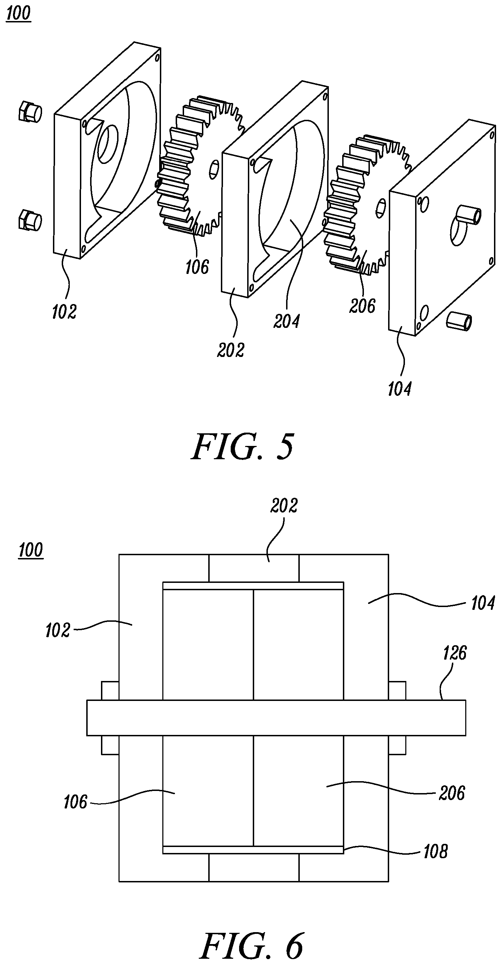

**Figures 5 and 6** show the rotary driver 100 as reconfigured (i.e. with respect to the configuration of Figures 3 and 4) to include an additional drive wheel 206 and an additional housing part - in particular, an intermediate housing part 202 which is configured to be installed between the first and second end parts 102, 104.

The intermediate housing part 202 comprises a cut-out 204 corresponding to the shapes of the recesses in the respective end parts, to thereby provide an extension of the chamber 108. In this particular example, the intermediate housing part 202 is of unit depth - i.e. it has an axial extent equal to one of the drive wheels. In this particular example, both the drive wheels 106, 206 are of the same unit depth.

Accordingly, by disassembling the rotary driver and re-assembling it with the additional drive wheel 206 and the additional intermediate housing part 202, the depth of the rotary driver is increased by one unit depth. Further additional drive wheels and intermediate housing parts may be provided, at the same unit depths or of other depths. In some configurations, a kit of parts for assembling rotary actuators may include wheels of different standard unit depths, to provide for finer variation of the axial extent of the rotary driver.

Each of the drive wheels 106, 206 are individual assembled to the shaft as described above. Further, the rotary driver and the housing parts cooperate to define a rotational seal as described above.

In some examples, the axial extent of the rotary driver may be varied by the addition or removal of a drive wheel without the addition or removal of a corresponding number of intermediate housing parts. For example, an additional drive wheel may be provided, and one of the end parts may be replaced with one configured to define a correspondingly deeper portion of a chamber 108, or a drive wheel of a multi-wheel rotary driver may be removed, and an end part may correspondingly be replaced with one configured to define a correspondingly shallower portion of a chamber 108.

In some examples, intermediate housing parts may be added or removed, but the number added or removed may differ from the number of drive wheels correspondingly added or removed. For example, two drive wheels of unit depth may be added to a rotary driver, and only one intermediate housing part having double the unit depth may be added.

Similarly, the axial extent of a rotary driver may be varied by replacement of a drive wheel with one of a different axial extent.

The inventors have found that reconfiguring a fluid-drive rotary actuator as described herein can enable the mechanical advantage (i.e. the force output for given fluid inlet conditions / motive pressure), rotational speed (for given fluid input conditions / motive pressure) and angular displacement (for given fluid input conditions / motive pressure) to be adjusted, for example during a design and test phase of a gas turbine engine.

In particular, by varying the axial extent of the rotary driver (and so the chamber of the housing) by providing a modular and reconfigurable rotary actuator as described herein, the actuation force of the rotary actuator for a given pressure can be varied. The inventors have found that such variation can be useful during test and development of a machine such as a gas turbine engine, or upon reconfiguration of a drive fluid system.

Further, by varying the tooth type or tooth configuration (e.g. changing the depth of and/or number of teeth), a design of a rotary actuator can be adjusted to react to changing performance requirements that may emerge after initial component design, with or without varying the axial extent of the rotary driver.

In particular, it is conventional practice to size and design an actuator to provide a specific force for a given pressure ratio. However, during initial design and test phases, the force required may not be settled upon, or the pressure of a drive fluid system may not be settled upon. Accordingly, it may be necessary to commission a further actuator once a revised requirement becomes clear, or when a supply pressure of a drive fluid system is changed or it is elected to use a different drive fluid system altogether. Such re-commissioning of an actuator may be problematic, particular when limited space is allocated for the actuator in the machine. Accordingly, it may be required to design an appropriate actuator from scratch (rather than use an off-the-shelf actuator), or make compromises in the system design to accommodate a undersized actuator.

The use of a modular rotary actuator as described herein enables rapid reconfiguration of the actuator to vary the actuation force for a given pressure, without affecting the footprint of the actuator other than in the axial dimension. In the design of a gas turbine engine or other machine, a space for an actuator may therefore be set aside to accommodate a reasonable amount of such axial variation. Such reconfiguration may be done during development and test, and also during in-service reconfigurations of the machine.

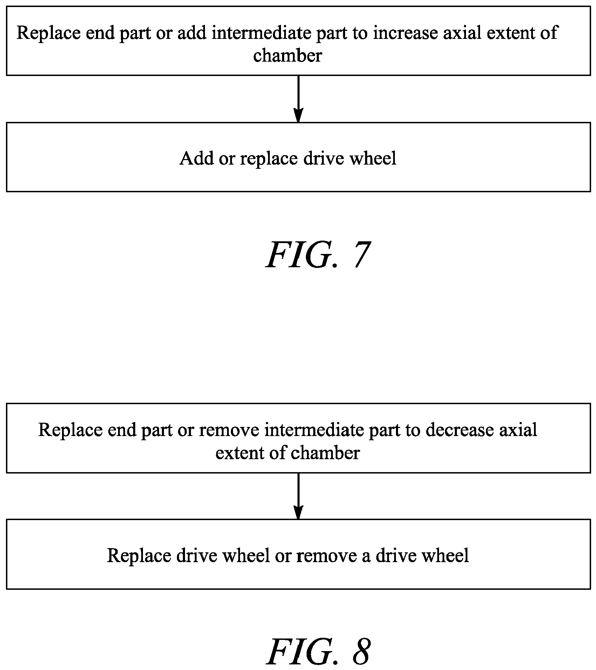

**Figure 7** is a flow diagram of an example method of varying the axial extent of a rotary actuator which is described by way of example with respect to the rotary actuator 100 of Figures 3-6. In this example, the rotary actuator is initially of the configuration as shown in Figures 3-4. In block 72, an installed end part is replaced or an intermediate housing part is added to increase the axial extent of the chamber 108 of the housing. In block 74, a drive wheel is correspondingly added, or the installed drive wheel 106 is replaced with one having a different axial extent.

For example, if an intermediate housing part 202 is added and an additional drive wheel 206 is added, the rotary actuator is reconfigured to the configuration shown in Figures 5-6.

**Figure 8** is a flow diagram of a further example method of varying the axial extent of a rotary actuator. In this example the rotary actuator is initially of the configuration as shown in Figures 5-6. In block 82, an installed end part is replaced or an intermediate housing part is removed to decrease the axial extent of the chamber 108 of the housing. In block 84, a drive wheel is corresponding removed, or an installed drive wheel 106, 206 is replaced with one having a different axial extent.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A modular fluid-driven rotary actuator (100) comprising:
a housing comprising a first end part (102) and a second end part (104) defining respective ends of a chamber (108) within the housing;
a rotary driver disposed within the chamber and coupled to a shaft (126) extending through the housing along a rotary axis, wherein the rotary driver comprises a modular driver assembly of at least two drive wheels (106, 206) coaxially assembled in side-by-side relationship and configured to rotate together to drive the shaft ;
a fluid inlet (114) extending through the housing to the chamber to provide a drive fluid to the rotary driver; and
a fluid outlet (116) extending through the housing from the chamber to discharge a drive fluid from the rotary driver.

2. The modular fluid-driven rotary actuator of claim 1, wherein the drive wheels (106, 206) are configured to rotate together by way of being individually rotationally fixed with respect to shaft.

3. The modular fluid-driven rotary actuator of claim 2, wherein the shaft (126) is keyed to engage corresponding holes in each of the drive wheels.

4. The modular fluid-driven rotary actuator of any preceding claim, wherein the housing comprises a modular housing assembly of at least three parts including:
the first part which defines at least a first axial end of the chamber (108);
the second part which defines at least a second axial end of the chamber; and
an interchangeable intermediate part (202) disposed between the first part and the second part;
wherein the modular housing assembly is configured for removal of the intermediate part, or replacement of the intermediate part with one or more intermediate parts to accommodate an alternative configuration of a rotary driver.

5. The modular fluid-driven rotary actuator of claim 1, wherein the axial extent of the intermediate part (202) corresponds to the axial extent of one of the drive wheels.

6. A gas turbine engine (10) comprising a modular fluid-driven rotary actuator in accordance with any preceding claim.

7. The gas turbine engine of claim 6, further comprising a variable stator vane arrangement, and wherein the modular fluid-driven rotary actuator (100) is configured to actuate the variable stator vane arrangement.

8. A method of reconfiguring a modular fluid-driven rotary actuator (100), the modular fluid-driven rotary actuator comprising:
a housing comprising a first end part (102) and a second end part (104) defining respective ends of a chamber (108) within the housing;
a rotary driver disposed within the chamber and coupled to a shaft (126) extending through the housing along a rotary axis;
a fluid inlet (114) extending through the housing to the chamber to provide a drive fluid to the rotary driver; and
a fluid outlet (116) extending through the housing from the chamber to discharge a drive fluid from the rotary driver;
the method comprising:
reconfiguring the rotary driver to vary a mechanical advantage of the actuator corresponding to a rotary force output of the shaft for given fluid inlet conditions.

9. The method of claim 8, comprising:
reconfiguring the rotary driver to vary its axial extent, including:
replacing an installed drive wheel (106, 206) of the rotary driver with a replacement drive wheel having a different axial extent, and/or
adding a drive wheel (106, 206) to provide a modular driver assembly comprising at least two drive wheels (106, 206) coaxially assembled in side-by-side relationship and configured to rotate together with the shaft (126), or removing an installed drive wheel from such a modular driver assembly; and
reconfiguring the housing to accommodate the variation in the axial extent of the rotary driver in the chamber (108), including:
adding an intermediate housing part (202) between the first end part (102) and the second end part (104) to provide a modular housing assembly, or removing an installed intermediate housing part from such a modular housing assembly; and/or
replacing one of the first end part and the second end part with a replacement end part so as to vary the axial extent of the chamber.

10. The method of claim 9, wherein a drive wheel (106, 206) having a first axial extent is added to or removed from the rotary driver; and
wherein an intermediate housing part (202) having the same first axial extent is correspondingly added to or removed from the rotary driver; or
one of the first end part (102) and the second end part (104) is replaced with a replacement end part so as to vary the axial extent of the chamber (108) by the first axial extent.

11. The method of any one of claims 8 to 10, wherein reconfiguring the rotary driver comprises:
replacing an installed drive wheel (106, 206) of the rotary driver having a first type of drive formation with a replacement drive wheel having a different type of drive formation; and/or
replacing an installed drive wheel of the rotary driver with a replacement drive wheel having a different tooth profile to that of the installed drive wheel.

12. The method of any one of claims 8 to 11, wherein the modular fluid-driven rotary actuator (100) is installed in a gas turbine engine (10), optionally wherein the gas turbine engine comprises a variable stator vane arrangement, and wherein the modular fluid-driven rotary actuator is configured to actuate the variable stator vane arrangement.
